# EUROPEAN PATENT APPLICATION

(11) **EP 2 811 657 A1**
(43) Date of publication of application: **10.12.2014**
(21) Application number: 13170616.0
(22) Date of filing: 05.06.2013
(51) Int. Cl.: H04B 3/46, H04L 12/26, H04L 12/10

(54) **Transmission line**

(71) Applicant: Chen, Chia Yung, Taipei City 116 (TW)
(72) Inventor: Chen, Chia Yung, Taipei City 116 (TW)
(74) Representative: Acco, Stefania

(57) **Abstract**

A transmission line includes a first connection module, transmission module, and second connection module. The first connection module has a first terminal, sampling unit, and first light emitting module. The transmission module has a cable and an optical fiber. The optical fiber has an end coupled to the first light emitting module. The cable has an end connected to the first terminal. The second connection module has a second terminal and fixing unit. The second terminal is connected to another end of the cable. The fixing unit is fixed to another end of the optical fiber. Current and data are transmitted between the first and second terminals by the cable. The sampling unit samples the current from the cable and generates sampling voltage to be transmitted to the first light emitting module for driving the first light emitting module to emit a first light coupled to the optical fiber.

## Description

### FIELD OF THE INVENTION

The present invention relates to transmission lines, and more particularly, to a transmission line capable of displaying a transmission status of a cable by means of an optical fiber.

### BACKGROUND OF THE INVENTION

According to the prior art, connected between multiple electronic devices is a transmission line for sending data and receiving the data or for transmitting current and receiving current. For example, the electronic devices include a mobile power source, a portable mobile device, a tablet computer, a charger, a keyboard, and/or a mouse. For instance, the electronic devices are hereunder exemplified by a mobile power source and a portable mobile device, respectively. After getting connected to the portable mobile device, the mobile power source has its current transmitted to the portable mobile device via the transmission line, such that the mobile power source can charge the portable mobile device.

In this regard, to determine whether the portable mobile device is receiving current from the mobile power source, a user has to watch an indicator mounted on the portable mobile device or read the contents displayed on a screen of the portable mobile device. Doing so, however, brings inconvenience to the user.

Accordingly, it is imperative to provide a transmission line conducive to overcoming the aforesaid drawbacks of the prior art.

### SUMMARY OF THE INVENTION

It is an objective of the present invention to provide a transmission line such that, after a cable has transmitted a current, an optical fiber transmits a light in response to the cable having transmitted the current, alternatively, after the cable has transmitted a data, the optical fiber transmits the light in response to the cable having transmitted the data.

Another objective of the present invention is to provide a transmission line so as to emit a light in different colors and/or in multiple instances during a fixed period of time, because of different levels of magnitude of the current transmitted by the cable.

Yet another objective of the present invention is to provide a transmission line so as to emit a light in different colors and/or in multiple instances during a fixed period of time, because of different levels of voltage of the data transmitted by the cable.

A further objective of the present invention is to provide a transmission line such that, in an environment of a weak light intensity, a user is able to connect the transmission line to an electronic device easily by means of a light ray emitted from a first connection module and/or a light ray emitted from a second connection module.

A further objective of the present invention is to provide a transmission line such that the user touches a touch unit to start emission of a light ray from the first connection module and/or start emission of a light ray from the second connection module.

In order to achieve the above and other objectives, the present invention provides a transmission line comprising a first connection module, a transmission module, and a second connection module. The first connection module has a first terminal, a sampling unit, and a first light emitting module. The first terminal is connected to the sampling unit. The first light emitting module is connected to the sampling unit. The transmission module is connected to the first connection module. The transmission module has a cable and an optical fiber. The optical fiber has an end coupled to the first light emitting module. The cable has an end connected to the first terminal. The second connection module has a second terminal and a fixing unit. The second terminal is connected to another end of the cable. The fixing unit fixes the other end of the optical fiber in place. Current and data are transmitted between the first terminal and the second terminal by the cable. The sampling unit samples the current from the cable and generates a sampling voltage. The sampling unit sends the sampling voltage to the first light emitting module to thereby drive the first light emitting module to emit a first light. The first light is coupled to the optical fiber.

Unlike the prior art, the present invention enables a user to directly inspect and evaluate current and data being transmitted between electronic devices by means of a transmission line or the current and data whose transmission has been finished.

### BRIEF DESCRIPTION OF THE DRAWINGS

Objectives, features, and advantages of the present invention are hereunder illustrated with specific embodiments in conjunction with the accompanying drawings, in which:
FIG. 1 is a schematic view of a transmission line according to the first embodiment of the present invention;
FIG. 2 is a perspective view of a cable and an optical fiber according to the present invention;
FIG. 3 is a schematic view of a second connection module of the transmission line according to the second embodiment of the present invention; and
FIG. 4 is a schematic view of a second connection module of the transmission line according to the third embodiment of the present invention.

### DETAILED DESCRIPTION OF THE PREFERRED EMBODIMENTS

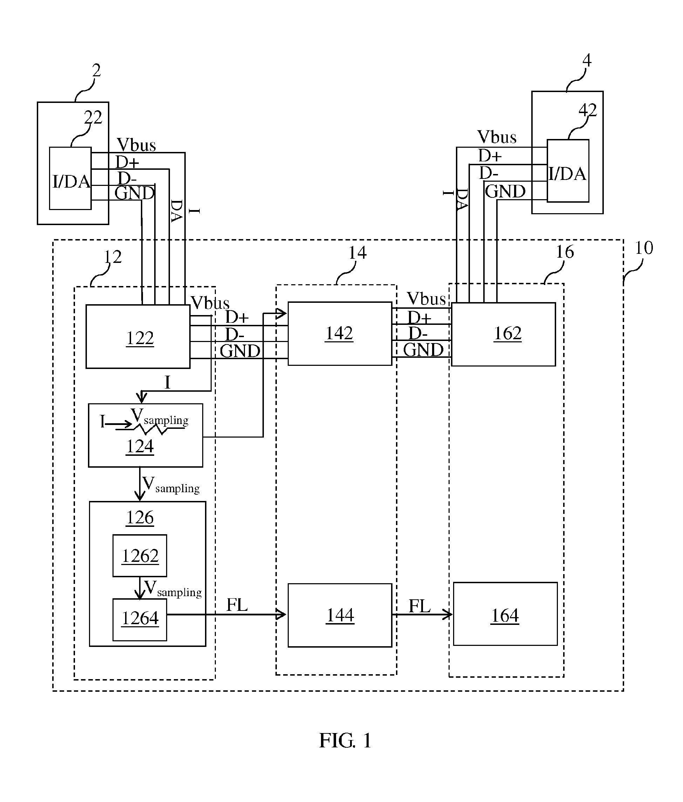

Referring to FIG. 1, there is shown a schematic view of a transmission line according to the first embodiment of the present invention. Referring to FIG. 1, the transmission line 10 connects a first electronic device 2 and a second electronic device 4. For example, the first electronic device 2 and the second electronic device 4 can be exemplified by a mobile power source, a portable mobile device, a tablet computer, and a charger. In this embodiment, the first electronic device 2 has a first slot 22, and the second electronic device 4 has a second slot 42. The first slot 22 and the second slot 42 each comply with IEEE 1394 and communication protocols applicable to universal serial bus (USB), micro USB, mini USB, Apple 30-pin dock, or Apple lightning. In this embodiment, the first slot 22 and the second slot 42 are each exemplified by a USB. The USB comprises four conducting wires, namely power line Vbus, positive-end data line (D+), negative-end data line D-, and ground line GND. The power line Vbus and the ground line GND together form a transmission loop for transmitting a current I. The positive-end data line D+ and the negative-end data line D- together form another transmission loop for transmitting a data DA.

The transmission line 10 comprises a first connection module 12, a transmission module 14, and a second connection module 16. The transmission module 14 connects the first connection module 12 and the second connection module 16.

The first slot 22 of the first electronic device 2 is connected to the first connection module 12, and the second slot 42 of the second electronic device 4 is connected to the second connection module 16. Hence, the current I and the data DA from the first slot 22 are transmitted via the first connection module 12, the transmission module 14, and the second connection module 16 to the second slot 42. Likewise, the current I and the data DA from the second slot 42 are transmitted via the second connection module 16, the transmission module 14, and the first connection module 12 to the first slot 22.

The first connection module 12 comprises a first terminal 122, a sampling unit 124, and a first light emitting module 126. The first terminal 122 is connected to the first slot 22. The sampling unit 124 is connected to the first terminal 122. The first light emitting module 126 is connected to the sampling unit 124.

The communication protocol applied to the first terminal 122 is the same as that applied to the first slot 22, such that the current I from the power line V_{bus} of the first slot 22 and the data DA from the positive-end data line D+ of the first slot 22 are transmitted to the first terminal 122. In this embodiment, the first terminal 122 complies with a USB protocol for the sake of illustration.

The sampling unit 124 samples the current I from the first terminal 122 and generates sampling voltage Vₛₐₘₚₗₑ in response to the current I. In this embodiment, the sampling unit 124 is exemplified by a resistor. The resistor is series-connected to the power line Vbus of the first terminal 122 and generates the sampling voltage V_{sampling} corresponding to the current I.

The first light emitting module 126 is connected to the sampling unit 124 and receives the sampling voltage V_{sampling} from the sampling unit 124. The first light emitting module 126 comprises a driving circuit 1262 and a light emitting unit 1264. The driving circuit 1262 receives the sampling voltage V_{sampling} and drives the light emitting unit 1264 to emit a first light FL. The light emitting unit 1264 can be provided in singularity or plurality. If the light emitting unit 1264 is provided in plurality and generate light of different wavelengths, one of the light emitting units 1264 will emit the first light FL as a result of the sampling voltage V_{sampling} received by the driving unit 1262. The light emitting units 1264 emit the first light FL of different wavelengths, respectively, because of a variety of levels of the sampling voltage V_{sampling}. Hence, a user verifies indirectly the present level of the sampling voltage V_{sampling} according to the first light FL of different wavelengths.

The transmission module 14 comprises a cable 142 and an optical fiber 144. The cable 142 has one end connected to the first terminal 122. The optical fiber 144 has one end coupled to the light emitting unit 1264.

The second connection module 16 comprises a second terminal 162 and a fixing unit 164.

The second terminal 162 is connected to the other end of the cable 142 and the second slot 42. The same communication protocol applies to the second terminal 162 and the second slot 42 to allow the current I and the data DA from the cable 142 to be transmitted via the second terminal 162 to the second slot 42. In this embodiment, the second terminal 162 is exemplified by a USB that complies with a communication protocol for the sake of illustration.

The fixing unit 164 fixes the other end of the optical fiber 144 to the second connection module 16.

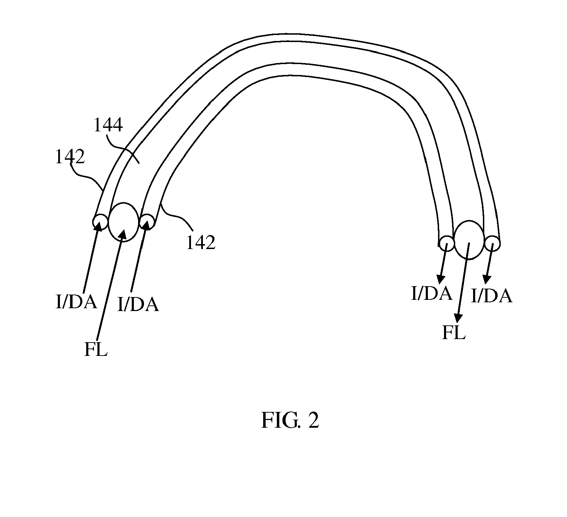

Referring to FIG. 2, the cable 142 is disposed at a portion of a side of the optical fiber 144. During the process of transmission of the first light FL through the optical fiber 144, a portion of the first light FL is emitted from the inside of the optical fiber 144 to the outside of the optical fiber 144. The user indirectly determines whether the current I is present in the cable 142, according to the first light FL emitted from the optical fiber 144.

In this embodiment, the optical fiber 144 is hereunder exemplified by a side emitting optical fiber. After the first light FL has entered the side emitting optical fiber, a portion of the first light FL propagates along the side emitting optical fiber before arriving at the fixing unit 164, whereas the other portion of the first light FL exits the inside of the side emitting optical fiber and enters the outside thereof.

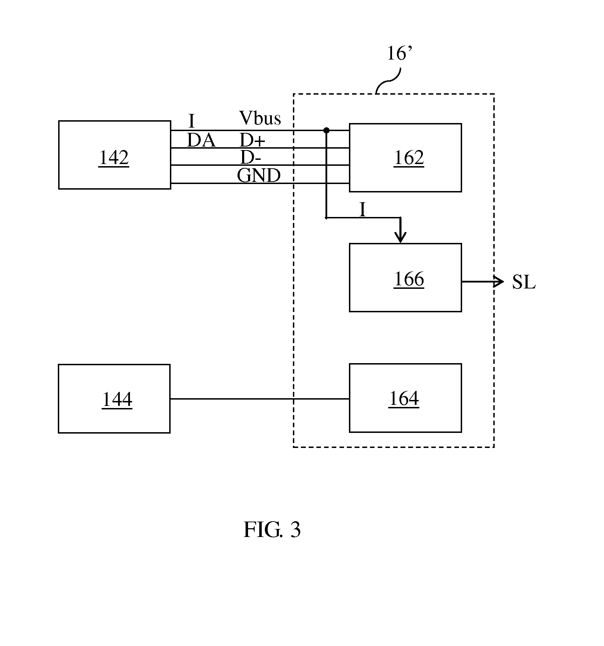

Referring to FIG. 3, there is shown a schematic view of a second connection module of the transmission line according to the second embodiment of the present invention. As shown in FIG. 3, a second connection module 16' comprises a second terminal 162, a fixing unit 164, and a second light emitting module 166. The second terminal 162 is connected to the cable 142. The fixing unit 164 fixes the optical fiber 144 in place. The second light emitting module 166 is connected to the power line Vbus of the cable 142.

With the second light emitting module 166 being connected to the power line Vbus, the current I from the power line Vbus drives the second light emitting module 166 to emit a second light SL.

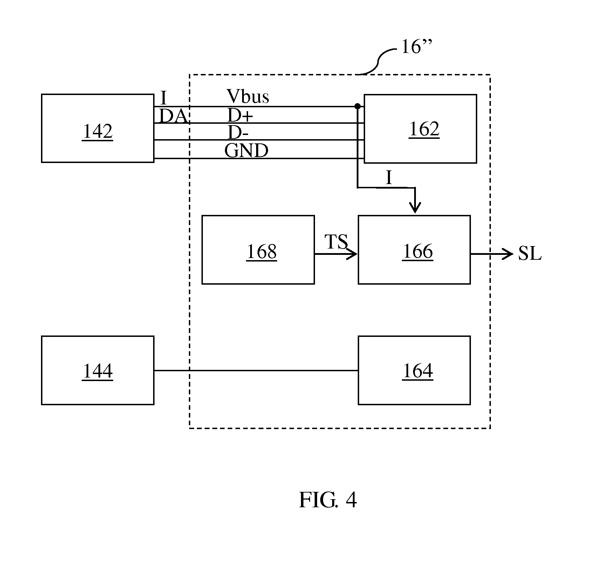

Referring to FIG. 4, there is shown a schematic view of a second connection module of the transmission line according to the third embodiment of the present invention. As shown in FIG. 4, a second connection module 16" comprises a second terminal 162, a fixing unit 164, a second light emitting module 166, and a touch unit 168. The second terminal 162 is connected to the power line Vbus. The fixing unit 164 fixes the optical fiber 144 in place. The second light emitting module 166 connects the cable 142 and the touch unit 168. As soon as the user touches the touch unit 168, the touch unit 168 generates touch signal TS.

After the second light emitting module 166 has received the current I from the cable 142 and the second light emitting module 166 has received the touch signal TS, the second light emitting module 166 emits the second light SL. Hence, it is not until the second light emitting module 166 receives the current I and the touch signal TS that the second light emitting module 166 emits the second light SL or does not emit the second light SL. Conversely, if the second light emitting module 166 receives one of the current I and the touch signal TS only, the second light emitting module 166 will emit the second light SL or will not emit the second light SL.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A transmission line, comprising:
a first connection module having a first terminal, a sampling unit, and a first light emitting module, the first terminal connecting to the sampling unit, and the first light emitting module connecting to the sampling unit;
a transmission module connecting to the first connection module and having a cable and an optical fiber, the cable having an end connected to the first terminal, and the optical fiber having an end coupled to the first light emitting module; and
a second connection module having a second terminal and a fixing unit, the second terminal being connected to another end of the cable, and the fixing unit being fixed to another end of the optical fiber,
wherein the cable transmits current and data between the first terminal and the second terminal, and the sampling unit samples the current of the cable, generates a sampling voltage, and outputs the sampling voltage to the first light emitting module to drive the first light emitting module to emit a first light, such that the first light is coupled to the optical fiber.

2. The transmission line of claim 1, wherein the cable is disposed at a portion of a side of the optical fiber.

3. The transmission line of claim 2, wherein the optical fiber is a side emitting optical fiber, and a portion of the first light is emitted from an inside of the side emitting optical fiber to an outside of the side emitting optical fiber.

4. The transmission line of claim 3, wherein the first light emitting module comprises a plurality of light emitting units and a driving unit, the driving unit connecting the light emitting units and the sampling unit and switching to one of the light emitting units according to a voltage level of the sampling voltage for emitting the first light.

5. The transmission line of claim 3, wherein the second connection module comprises a second light emitting module connected to the cable and driven by a current of the cable to emit a second light.

6. The transmission line of claim 5, wherein the second connection module comprises a touch unit connected to the second light emitting module and adapted to generate a touch signal when touched by a user and send the touch signal to the second light emitting module such that, upon receipt of the touch signal, the second light emitting module emits the second light.

7. The transmission line of claim 5, wherein the second connection module comprises a touch unit connected to the second light emitting module and adapted to generate a touch signal when touched by a user and send the touch signal to the second light emitting module such that, upon receipt of the touch signal, the second light emitting module does not emit the second light.

8. The transmission line of claim 1, wherein the first terminal and the second terminal each comply with IEEE 1394 and communication protocols applicable to one of universal serial bus (USB), micro USB, mini USB, Apple 30-pin dock, and Apple lightning.
